(19) Europäisches Patentamt
European Patent Office
Office européen des brevets

(11) **EP 3 182 191 B1**

(12) **EUROPÄISCHE PATENTSCHRIFT**

(45) Veröffentlichungstag und Bekanntmachung des Hinweises auf die Patenterteilung:
**18.07.2018 Patentblatt 2018/29**

(51) Int Cl.:
***G02B 27/09*** (2006.01)      ***B23K 26/00*** (2014.01)
***G02B 27/58*** (2006.01)      ***G02B 5/00*** (2006.01)

(21) Anmeldenummer: **17151779.0**

(22) Anmeldetag: **25.01.2016**

(54) **ANORDNUNG OPTISCHER ELEMENTE ZUR FOKUSSIERUNG KOLLIMIERTER STRAHLEN**

ASSEMBLY OF OPTICAL ELEMENTS FOR FOCUSSING COLLIMATED BEAMS

SYSTÈME D'ÉLÉMENTS OPTIQUES DESTINÉS À LA MISE AU POINT DE RAYONNEMENTS COLLIMATÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2015 DE 102015201639**

(43) Veröffentlichungstag der Anmeldung:
**21.06.2017 Patentblatt 2017/25**

(62) Dokumentnummer(n) der früheren Anmeldung(en) nach Art. 76 EPÜ:
**16152593.6 / 3 051 329**

(73) Patentinhaber: **asphericon GmbH**
**07747 Jena (DE)**

(72) Erfinder:
• **KIONTKE, Sven**
**07743 Jena (DE)**
• **FUCHS, Ulrike, Dr.**
**07745 Jena (DE)**

(74) Vertreter: **Liedtke, Markus**
**Liedtke & Partner**
**Patentanwälte**
**Gerhart-Hauptmann-Straße 10/11**
**99096 Erfurt (DE)**

(56) Entgegenhaltungen:
**EP-A1- 2 258 510        EP-A2- 0 627 643**
**DE-A1-102007 024 700   JP-A- 2003 275 888**
**US-A1- 2001 017 838    US-A1- 2009 242 523**

**Beschreibung**

Die Erfindung betrifft eine Anordnung optischer Elemente zur Fokussierung näherungsweise kollimierter Strahlen nach dem Oberbegriff des Anspruchs 1.

Aus dem Stand der Technik sind optische Elemente zur Strahlfokussierung bekannt, die kollimierte Eingangsstrahlen um eine optische Achse in Ausgangsstrahlen brechen, die sich in einem Fokusbereich überlagern. Damit ist es möglich, eine vergleichsweise niedrige, aber über eine vergleichsweise weite Eintrittspupille verteilte mittlere Eintrittsbestrahlungsstärke in eine vergleichsweise höhere, aber in einem vergleichsweise engen Querschnitt des Fokusbereichs konzentrierte mittlere Austrittsbestrahlungsstärke zu wandeln. Aus dem Stand der Technik ist die Anwendung solcher optischer Elemente bekannt, um nur innerhalb des Fokusbereichs eine Mindestbestrahlungsstärke zu überschreiten, oberhalb der gewisse physikalische Effekte wie Polymerisation, optischer Durchbruch oder ein Aufschmelzen fester Werkstoffe ausgelöst werden. Somit ist eine Bearbeitung von Werkstoffen oder biologischem Gewebe in einem durch den Fokusbereich relativ scharf begrenzten räumlichen Ausschnitt möglich.

Sowohl zur Erzielung besonders hoher Bestrahlungsstärken als auch für eine besonders präzise Bearbeitung sind optische Elemente vorteilhaft, mit denen ein Eingangsstrahlenbündel eines vorgegebenen Querschnitts auf einen besonders engen Fokusbereich fokussiert werden kann. Aus dem Stand der Technik sind hierfür beispielsweise asphärische Linsen bekannt, die unter Zugrundelegung der Gesetze der Strahlenoptik so geformt werden können, dass beliebige, parallel zur optischen Achse verlaufende Eingangsstrahlen für Licht einer Wellenlänge in Ausgangsstrahlen gebrochen werden, die sich in einem Brennpunkt schneiden, der sich im Abstand der Brennweite von der austrittsseitigen Hauptebene der asphärischen Linse auf der optischen Achse befindet.

Unter Berücksichtigung wellenoptischer Effekte lässt sich jedoch auch mit derartigen asphärischen Linsen und auch für monochromatisches Licht kein Brennpunkt infinitesimal kleiner Ausdehnung erzielen, sondern lediglich ein Fokusbereich endlicher Ausdehnung, die üblicherweise mit dem Durchmesser des Airy-Scheibchens

$$d_{Airy} = 1{,}22 \cdot \frac{\lambda}{n \cdot \sin(\alpha)}$$

angegeben wird, wobei $\lambda$ die Wellenlänge des monochromatischen Lichts, $n$ die Brechzahl des die Linse umgebenden Mediums und $\alpha$ den halben austrittsseitigen Öffnungswinkel der asphärischen Linse bezeichnet.

Anordnungen und Verfahren nach dem Stand der Technik verringern die Ausdehnung des Fokusbereichs durch eine Vergrößerung der numerischen Apertur. Bei gleichbleibendem Querschnitt der Eintrittspupille kann eine Vergrößerung der numerischen Apertur nach dem Stand der Technik durch Verringerung der Brennweite, und somit auch Verringerung des Arbeitsabstands zwischen der Frontfläche der Linse und dem zu bearbeitenden Material, bewirkt werden. Nach dem Stand der Technik kann eine Vergrößerung der numerischen Apertur auch durch Verwendung einer Immersionsflüssigkeit zwischen der Linse und dem zu bearbeitenden Material, die eine höhere Brechzahl als Luft aufweist, bewirkt werden.

Das Dokument EP 0 627 643 A1 offenbart ein scannendes optisches System mit einem optischen Konverter, der zwei Axikons umfasst. Die Axikons sind koaxial mit den Kegelspitzen aufeinander zuweisend in einem vorbestimmten Abstand angeordnet. Sie sind aus dem gleichen Material gefertigt und weisen den gleichen Kegelwinkel auf. Sie sind in einem vorbestimmten Abstand angeordnet.

Das Dokument EP 2 258 510 A1 beschreibt eine Vorrichtung und ein Verfahren zur Materialbearbeitung mit Laserstrahlung umfassend zwei drehbewegliche und verschiebbare transparente Elemente zur Verschiebung und Drehung eines Laserstrahls sowie eine Sammellinse. Mittels der Vorrichtung und des Verfahrens kann der Verjüngungswinkel einer bei der Laserbearbeitung in eine Oberfläche eingebrachten Öffnung gesteuert werden.

Das Dokument DE 10 2007 024 700 A1 beschreibt ein Verfahren zur Materialbearbeitung mit Laserstrahlung, bei dem unfokussierte Laserstrahlung fokussiert wird und die aus der Fokussierung resultierende Strahltaille im Bereich der Wechselwirkungsfläche von Laserstrahlung und Material gehalten wird. Der Abstand der Strahltaille von der Ober- oder Unterseite der Wechselwirkungsfläche in axialer Richtung entspricht maximal dem dreifachen Wert der Eindringtiefe der Wechselwirkungsfläche in das Material.

Das Dokument JP 2003 275888 A beschreibt eine Vorrichtung zur Materialbearbeitung mit Laserstrahlung, wobei die Energieausbeute durch Verwendung von Licht erhöht wird, das an der Oberfläche des bearbeiteten Objekts reflektiert wird.

Das Dokument US 2001/0017838 A1 beschreibt einen Strahlformer zur Formung eines im Wesentlichen ringförmigen Strahlprofils, mit dem Licht aus einem Bereich hoher numerischer Apertur in einem sehr kleinen Punkt gesammelt wird.

Das Dokument US 2009/0242523 A1 beschreibt ein Laserbearbeitungsverfahren, mit dem Irregularitäten auf der Oberfläche eines Kunststoffelements, das mit einem Metallelement verbunden wird, vermieden werden. Bei dem Verfahren werden Laserstrahlen aus unterschiedlichen Richtungen nahe der Grenzfläche zwischen dem Kunststoffelement und dem Metallelement fokussiert.

Das Dokument EP 2 258 510 A1 beschreibt eine Laserbearbeitungsvorrichtung mit einer ersten und einer zweiten Verschiebevorrichtung. Die erste Verschiebevorrichtung versetzt einen Laserstrahl entlang einer ersten Richtung. Die zweite Verschiebevorrichtung versetzt einen Laserstrahl entlang einer zweiten Richtung, die senkrecht zur ersten Richtung angeordnet ist. Mittels der Laserbearbeitungsvorrichtung kann die Verjüngung eines mittels Laserbohren erzeugten Lochs gesteuert werden.

Der Erfindung liegt die Aufgabe zu Grunde, einen Strahlfokussierer zur Fokussierung von näherungsweise kollimiertem, über eine Eintrittspupille vorgegebenen Durchmessers verteiltem Licht anzugeben, der eine höhere Bestrahlungsstärke in einem engeren Fokusbereich um einen Brennpunkt erlaubt und/oder einen größerer Arbeitsabstand und/oder eine bessere Beweglichkeit relativ zu einem zu bearbeitenden Material aufweist als Anordnungen nach dem Stand der Technik und bei dem der Arbeitsabstand leicht verstellbar ist. Der Erfindung liegt ferner die Aufgabe zu Grunde, ein Verfahren zur Justierung eines solchen Strahlfokussierers anzugeben. Der Erfindung liegt zudem die Aufgabe zu Grunde, ein Verfahren zur Anwendung eines solchen Strahlfokussierers und eine Anordnung zur Durchführung eines solchen Verfahrens anzugeben.

Die Aufgabe wird hinsichtlich der Anordnung erfindungsgemäß durch die im Anspruch 1 angegebenen Merkmale gelöst. Die Aufgabe wird hinsichtlich des Justierverfahrens erfindungsgemäß durch die im Anspruch 8 angegebenen Merkmale gelöst. Die Aufgabe wird hinsichtlich des Verfahrens zur Anwendung der Anordnung erfindungsgemäß durch die im Anspruch 10 angegebenen Merkmale gelöst. Die Aufgabe wird hinsichtlich der Anordnung zur Durchführung des Verfahrens durch die im Anspruch 14 angegebenen Merkmale gelöst.

Vorteilhafte Ausgestaltungen der Erfindung sind Gegenstand der Unteransprüche.

Bei einem Strahlfokussierer zur Fokussierung eines Eintrittsbündels von näherungsweise kollimierten Strahlen um eine optische Achse in einem Fokusbereich wird zentriert entlang der optischen Achse des Strahlfokussierers eintrittsseitig ein erstes Axikon mit einem Axikonwinkel, gefolgt von einem zweiten Axikon mit gleichem Axikonwinkel, gefolgt von einer austrittsseitig angeordneten Abbildungsoptik angeordnet. Das erste und das zweite Axikon sind spiegelsymmetrisch entlang der optischen Achse angeordnet, so dass entweder die Kegelspitzen beider Axikons, oder aber die Planflächen beider Axikons aufeinander zu weisen. Somit weisen entweder die Planfläche des ersten Axikons zur Eintrittsseite und die Planfläche des zweiten Axikons zur Austrittsseite des Strahlfokussierers, oder aber die Planfläche des ersten Axikons zur Austrittsseite und die Planfläche des zweiten Axikons zur Eintrittsseite des Strahlfokussierers. Die austrittsseitig angeordnete Abbildungsoptik weist mindestens einen Brennpunkt auf, der austrittsseitig auf der optischen Achse liegt.

Mittels der spiegelsymmetrisch angeordneten Axikons wird ein Eintrittsbündel von Lichtstrahlen, die näherungsweise kollimiert zur optischen Achse sind und eine um diese optische Achse rotationssymmetrisch gaußförmig verteilte Bestrahlungsstärke aufweisen, in ein ringförmig auf die Abbildungsoptik auftreffendes Bündel von zur optischen Achse näherungsweise parallelen Lichtstrahlen umgeformt. Die Abbildungsoptik fokussiert dieses ringförmige Bündel von Lichtstrahlen in einem Fokusbereich, der um den Brennpunkt der Abbildungsoptik liegt. Dabei ist die Bestrahlungsstärke in der Brennebene, die den Brennpunkt enthält und welche im Brennpunkt von der optischen Achse durchstoßen wird, rotationssymmetrisch zum Brennpunkt verteilt.

Bei einer Ausführungsform der Erfindung ist die ausgangsseitig angeordnete Abbildungsoptik als asphärische Linse ausgebildet. Die asphärische Linse kann als rotationssymmetrische Linse mit stetiger Krümmung entlang eines Meridianschnitts durch die eintrittsseitige und/oder durch die austrittsseitige Linsenfläche ausgebildet sein. Die asphärische Linse kann beispielsweise als plankonvexe asphärische Linse mit austrittsseitig angeordneter konvexer Fläche ausgebildet sein, mit welcher sich bei kollimierten, zur optischen Achse parallelen Strahlen eines Eintrittsbündels unter Vermeidung sphärischer Aberrationen eine beugungsbegrenzte Fokussierung in einem besonders engen Fokusbereich erzielen lässt.

Ein Vorteil des erfindungsgemäßen Strahlfokussierers besteht darin, dass die Bestrahlungsstärkeverteilung enger um den Brennpunkt verteilt ist als bei Strahlfokussierern nach dem Stand der Technik. Der Wirksamkeitsbereich, in dem die Bestrahlungsstärkeverteilung in der Brennebene eine gewisse vorbestimmte Mindestbestrahlungsstärke überschreitet, ist als Kreisfläche mit einem kleineren Durchmesser ausgebildet, als dies mit Strahlfokussierern nach dem Stand der Technik möglich ist. Dadurch ist bei Anwendungen für einen Strahlfokussierer, die auf einem physikalischen Effekt beruhen, der im Wesentlichen nur oberhalb einer solchen Mindestbestrahlungsstärke auftritt, eine höhere Genauigkeit erzielbar. Alternativ ist es auch möglich, innerhalb eines Wirksamkeitsbereichs, der auch mit Strahlfokussierern nach dem Stand der Technik erreichbar ist, eine höhere Bestrahlungsstärke zu erzeugen. Damit kann eine Mindestbestrahlungsstärke für physikalische Effekte erreicht werden, die mit bisher bekannten Strahlfokussierern nicht oder nur unzureichend erzielbar war.

Die asphärische Linse kann auch als bikonvexe Linse mit zwei gekrümmten Flächen ausgebildet sein. In vorteilhafter Weise ist damit eine größere Robustheit gegenüber Verkippungen der optischen Elemente des Strahlfokussierers gegeneinander und/oder relativ zur optischen Achse erzielbar. Die bikonvexe Linse kann als biasphärische Linse mit zwei gekrümmten asphärischen Flächen ausgebildet sein. Durch eine geeignete Krümmung der eintrittsseitigen asphärischen Fläche ist es auch möglich, bis zu einem vorbestimmten Konvergenzwinkel oder Divergenzwinkel konvergierende oder divergierende, also nicht perfekt kollimierte, Strahlen eines Eintrittsbündels im Fokusbereich zu fokussieren.

Die Abbildungsoptik kann auch als plankonvexe sphärische Linse oder als bisphärische Linse ausgebildet sein, die besonders leicht und kostengünstig ge-

fertig werden können. Zwar weist eine solche plankonvexe sphärische oder bisphärische Linse eine sphärische Aberration auf. Für gewisse Anwendungen des Strahlfokussierers, bei denen lediglich ein Wirksamkeitsbereich mit einer vorgegebenen Fläche ohne Berücksichtigung der Abbildungsschärfe erzielt werden muss, können derartige sphärische Aberrationen in Kauf genommen werden.

Die Abbildungsoptik kann auch als konkav-konvexe Sammellinse oder auch Meniskuslinse ausgebildet sein, die austrittsseitig eine konvexe und eintrittsseitig eine konkave Fläche aufweist. In vorteilhafter Weise können damit bis zu einem vorbestimmten Konvergenzwinkel oder Divergenzwinkel konvergierende oder divergierende, also nicht perfekt kollimierte, Strahlen eines Eintrittsbündels im Fokusbereich fokussiert werden. Es ist auch möglich, mittels solcher konkavkonvexer Sammellinsen eine verbesserte Robustheit gegenüber Verkippungen der optischen Bauelemente des Strahlfokussierers gegeneinander und/oder gegen die optische Achse zu erzielen.

Ferner ist es möglich, eine Abbildungsoptik als System von Linsen zusammenzusetzen, die sphärische und/oder asphärische und/oder plane Flächen aufweisen. Mittels einer solchen zusammengesetzten Abbildungsoptik ist es beispielsweise möglich, die durch die chromatische Aberration bewirkte Ausweitung des Fokusbereichs, und somit auch des Wirksamkeitsbereichs, zu verringern, wenn das Eintrittsbündel Licht unterschiedlicher Wellenlänge umfasst.

Bei einer Ausführungsform des Strahlfokussierers ist der Abstand zwischen dem ersten und dem zweiten Axikon verstellbar. In vorteilhafter Weise kann durch Vergrößerung oder Verkleinerung dieses Abstands der auf die Abbildungsoptik gelenkte Lichtring geweitet oder verengt werden, wodurch die Lage der Brennebene und/oder die Bestrahlungsstärkeverteilung in der Brennebene verändert werden kann.

Ist die Abbildungsoptik als asphärische Linse ausgebildet, so kann der Krümmungsradius an jedem Punkt einer eintrittsseitigen asphärischen Fläche und/oder einer austrittsseitigen asphärischen Fläche rotationssymmetrisch zur optischen Achse so gewählt werden, dass ein infinitesimal schmaler, in die asphärische Linse eintretender Lichtring in Abhängigkeit von seinem Durchmesser an verschiedenen Orten austrittsseitig entlang der optischen Achse fokussiert wird. Somit ist es in dieser Ausführungsform der Erfindung möglich, die Brennebene durch Variation des Abstands zwischen dem ersten und dem zweiten Axikon entlang der optischen Achse zu verschieben. In vorteilhafter Weise kann dadurch beispielsweise der Arbeitsabstand zwischen dem Strahlfokussierer und einem zu bearbeitenden Werkstück oder Material verändert werden.

Bei einem Justierverfahren zur Justierung eines erfindungsgemäßen Strahlfokussierers mit verstellbarem Abstand zwischen dem ersten und dem zweiten Axikon wird dieser Abstand entsprechend einer rechnerisch oder experimentell bestimmten Kennlinie eingestellt, welche in Abhängigkeit von der Wellenlänge von im Wesentlichen monochromatischen Licht diesen Abstand so angibt, dass für dieses Licht ein Fokusbereich mit minimaler Ausdehnung erzielt wird. In vorteilhafter Weise ist dadurch ein Strahlfokussierer realisierbar, der mit monochromatischem Licht unterschiedlicher Wellenlänge betrieben werden kann und für den der Wirksamkeitsbereich, in welchem eine Mindestbestrahlungsstärke überschritten wird, angepasst an die Wellenlänge dieses monochromatischen Lichts begrenzt oder minimiert wird. So ist es in einfacher Weise möglich, einen Strahlfokussierer mit unterschiedlichen, an das zu bearbeitende Material oder Werkstück optimal angepassten Lichtquellen, beispielsweise mit unterschiedlichen Laserquellen oder einem durchstimmbaren Laser, zu betreiben.

Bei einem Justierverfahren zur Justierung eines erfindungsgemäßen Strahlfokussierers mit verstellbarem Abstand zwischen dem ersten und dem zweiten Axikon ist es ferner möglich, durch Variation dieses Abstands gemäß einer rechnerisch oder experimentell bestimmten Kennlinie den Abstand der Brennebene und somit den Abstand des Fokusbereichs von der Abbildungsoptik entlang der optischen Achse zu verändern. In vorteilhafter Weise kann ein solcher Strahlfokussierer somit für unterschiedliche, für den jeweiligen Bearbeitungszweck optimierte Arbeitsabstände zum bearbeiteten Material oder Werkstück justiert werden.

Bei einem Verfahren zur Fokussierung eines näherungsweise kollimierten Strahlenbündels mit einem erfindungsgemäßen Strahlfokussierer ist innerhalb des Fokusbereichs eine Bestrahlungsstärke oberhalb eines Bestrahlungsstärkegrenzwerts für einen physikalischen Effekt erzielbar, wobei der physikalische Effekt bei einer Bestrahlungsstärke unterhalb des Bestrahlungsstärkegrenzwerts näherungsweise vollständig ausbleibt. In vorteilhafter Weise ist es somit möglich, diesen physikalischen Effekt innerhalb eines Wirksamkeitsbereichs mit näherungsweise kreisförmigem Querschnitt und einem im Vergleich zu Verfahren nach dem Stand der Technik besonders kleinen Durchmesser zu erzielen. Damit sind Bearbeitungsverfahren mit besonders hoher Genauigkeit und/oder Auflösung möglich.

Beispielsweise ist es möglich, dass der Effekt auf einer Polymerisation beruht, die bei einem oder oberhalb eines Bestrahlungsstärkegrenzwerts näherungsweise vollständig erfolgt und unterhalb dieses Bestrahlungsstärkegrenzwerts nahezu ausbleibt. In vorteilhafter Weise können somit mittels eines erfindungsgemäßen Strahlfokussierers solche sogenannten 3D-Druckverfahren, welche auf einer über Bestrahlung ausgelösten Polymerisation beruhen, mit einer besonders hohen Auflösung ausgeführt werden.

In einer weiteren Ausführungsform des Verfahrens ist es möglich, oberhalb eines Bestrahlungsstärkegrenzwerts einen optischen Durchbruch in einem besonders kleinen und besonders genau begrenzten Bereich in einem bearbeiteten Material auszulösen. Damit sind beispielsweise aus dem Stand der Technik bekannte Verfahren zur laserinduzierten Kavitation, beispielsweise zum Auftrennen von kornealem Gewebe oder Linsengewebe bei einer Laser-in-situ-Keratomileusis (LASIK) Operation mittels ultrakurzer Laserpulse, besonders genau und schonend durchführbar. Es sind jedoch auch zahlreiche andere, aus dem Stand der Technik bekannte Verfahren zur Laserchirurgie mit verbesserter Genauigkeit und Auflösung ausführbar.

In einer weiteren Ausführungsform des Verfahrens wird oberhalb eines Bestrahlungsstärkegrenzwerts ein fester Werkstoff aufgeschmolzen. Hiermit sind beispielsweise aus dem Stand der Technik bekannte Verfahren des Laserschweißens oder Laserschneidens besonders genau und/oder mit besonders schmalen Schweißnähten oder Trennfugen möglich.

Bei einer Anordnung zur Durchführung eines Verfahrens zur Fokussierung eines näherungsweise kollimierten Strahlenbündels mit einem erfindungsgemäßen Strahlfokussierer wird der Strahlfokussierer eintrittsseitig mit näherungsweise kollimiertem Licht beleuchtet. In vorteilhafter Weise können hierzu Laserquellen verwendet werden, die kostengünstig und leistungsstark verfügbar sind.

Bei einer Ausführungsform einer solchen Anordnung ist der Strahlfokussierer austrittsseitig mit dem Fokusbereich durch eine Immersionsflüssigkeit mit einem Brechungsindex oberhalb von 1 verbunden, die eine Vergrößerung der numerischen Apertur des Strahlfokussierers bewirkt. Dadurch wird bei unveränderter Geometrie und Bestrahlungsstärke der eintrittsseitigen Beleuchtung des Strahlfokussierers eine Verengung des Fokusbereichs und somit eine erhöhte Bestrahlungsstärke in der Brennebene und/oder ein verkleinerter Querschnitt des Wirksamkeitsbereichs erzielt. Ebenso ist es möglich, bei unverändertem Fokusbereich den Querschnitt des Eintrittsbündels von Lichtstrahlen zu vergrößern und somit eine höhere Lichtenergie in den Strahlfokussierer einzukoppeln und folglich eine höhere Bestrahlungsstärke in der Brennebene zu erzielen. Weiterhin ist es möglich, bei unverändertem Fokusbereich und unverändertem Querschnitt des Eintrittsbündels den Durchmesser der Abbildungsoptik zu verringern und somit einen kostengünstigeren und einfacher herstellbaren Strahlfokussierer zu verwenden.

Bei einer weiteren Ausführungsform einer solchen Anordnung ist zwischen dem erfindungsgemäßen Strahlfokussierer und dem Fokusbereich ein optisch durchlässiges Schutzelement angeordnet, das in vorteilhafter Weise eine Verschmutzung oder mechanische Beeinträchtigung des Strahlfokussierers, insbesondere der austrittsseitig angeordneten Abbildungsoptik, verhindert. Beispielsweise kann ein solches Schutzelement die Ablagerung von verdampftem oder verspritztem Material auf der Abbildungsoptik des Strahlfokussierers beim Laserschweißen oder Laserschneiden vermeiden oder vermindern.

Bei einer weiteren Ausbildung dieser Ausführungsform der Erfindung ist das Schutzelement wechselbar. In vorteilhafter Weise kann damit bei besonders verschmutzungsintensiven Bearbeitungsverfahren ein verschmutztes Schutzelement mit geringem Aufwand gegen ein neues oder gereinigtes Schutzelement getauscht werden oder für eine Reinigung entnommen werden. Dadurch sind eine Bearbeitung mit im Wesentlichen dauerhaft unverminderter Bestrahlungsstärke und zugleich eine verringerte Rüst- oder Wartungszeit erzielbar.

Ausführungsbeispiele der Erfindung werden im Folgenden anhand von Zeichnungen näher erläutert.

Darin zeigen:

Figur 1 schematisch den Strahlverlauf durch eine plankonvexe asphärische Linse,

Figur 2 schematisch das Profil der Bestrahlungsstärke durch einen Fokusbereich entlang des Abstands von der optischen Achse und

Figur 3 schematisch den Strahlverlauf durch eine Anordnung zur Strahlfokussierung mit zwei Axikons.

Einander entsprechende Teile sind in allen Figuren mit den gleichen Bezugszeichen versehen.

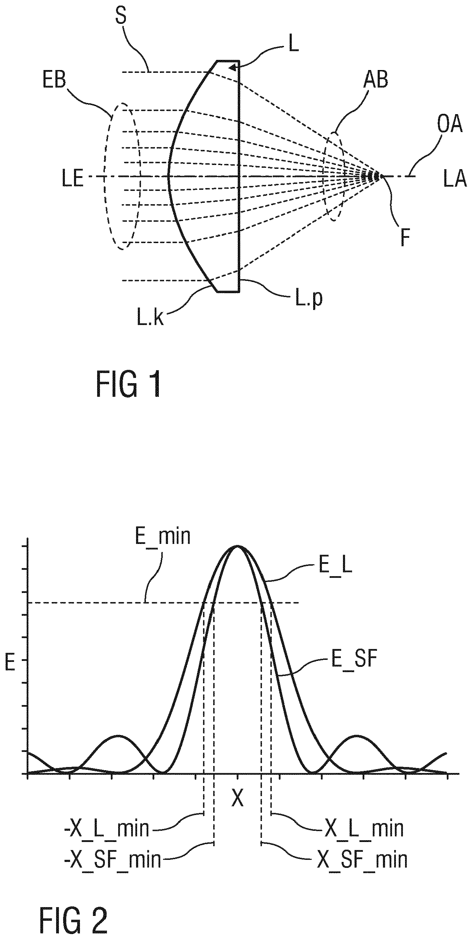

**Figur 1** zeigt schematisch den Verlauf von Lichtstrahlen S durch eine plankonvexe asphärische Linse L mit einer optischen Achse OA nach dem Stand der Technik. Ein Eintrittsbündel EB zur optischen Achse OA kollimierter Eingangsstrahlen tritt am Lichteintritt LE in die plankonvexe asphärische Linse L an deren konvexer Fläche L.k ein. Ein Austrittsbündel AB konvergenter Ausgangsstrahlen tritt am Lichtaustritt LA an der planen Fläche L.p der plankonvexen asphärischen Linse L wieder aus. Die konvexe Fläche L.k ist rotationssymmetrisch zur optischen Achse OA so geformt, dass sich die Ausgangsstrahlen nach den Gesetzen der Strahlenoptik in einem austrittsseitig der plankonvexen asphärischen Linse L gelegenen Fokus oder Brennpunkt F schneiden würden.

Die wegen der Wellennatur des Lichtes zu berücksichtigende Beugung bewirkt jedoch, dass entgegen den Gesetzen der Strahlenoptik nicht der gesamte, auf alle eingehenden Lichtstrahlen S verteilte Strahlungsfluss im Brennpunkt F konzentriert wird, sondern vielmehr rotationssymmetrisch zur optischen Achse OA in einer Brennebene verteilt wird, wobei die Brennebene die Ebene ist, die den Brennpunkt F enthält und in diesem senkrecht von der optischen Achse OA durchstoßen wird.

**Figur 2** zeigt schematisch die Verteilung der Bestrahlungsstärke in der Brennebene entlang einer beliebigen gedachten Linie durch den Brennpunkt F als Bestrahlungsstärkeprofil, wobei auf der Positionsachse X der Abstand einer Position x zum Brennpunkt F und auf der Bestrahlungsstärkeachse E der Wert der Bestrahlungsstärke aufgetragen ist, der in diesem Abstand x gemessen wird. In gleichem Abstand, aber in entgegengesetzter Richtung vom Brennpunkt F gelegene Positionen entlang der gedachten Linie durch den Brennpunkt F tragen entgegengesetzte Vorzeichen.

Wenn eine plankonvexe asphärische Linse L mit einem Eintrittsbündel EB kollimierter Strahlen S beleuchtet wird, wie in Figur 1 schematisch dargestellt, und wenn dieses Eintrittsbündel EB eine um die optische Achse OA rotationssymmetrische gaußförmige Bestrahlungsstärkeverteilung aufweist, so ergibt sich in der Brennebene eine um die optische Achse OA rotationssymmetrische Bestrahlungsstärkeverteilung und ein Bestrahlungsstärkeprofil E_L mit einem Maximum an der Position x=0, also am Ort des Brennpunkts F, das von zwei Nullstellen umgeben ist. Aus der Rotationssymmetrie der Bestrahlungsstärkeverteilung relativ zur optischen Achse OA folgt ein spiegelsymmetrischer Verlauf des Bestrahlungsstärkeprofils E_L relativ zur Senkrechten durch die Position x=0.

Wird für die Erzielung eines bestimmten physikalischen Effekts, beispielsweise für eine Polymerisation, für einen optischen Durchbruch oder für ein Aufschmelzen eines Werkstoffs, eine bestimmte Mindestbestrahlungsstärke E_min benötigt, so wird dieser physikalische Effekt in der Brennebene nur innerhalb eines Wirksamkeitskreises um die optische Achse OA erzielt, dessen Radius durch den Abstandswert x_L_min gegeben ist, an welchem die Mindestbestrahlungsstärke E_min vom Bestrahlungsstärkeprofil E_L gerade erreicht wird.

Die Lage der beiden das Maximum im Brennpunkt F umgebenden Nullstellen des Bestrahlungsstärkeprofils E_L ist durch die numerische Apertur der plankonvexen asphärischen Linse L bestimmt. Eine Vergrößerung der numerischen Apertur bewirkt ein Zusammenrücken dieser Nullstellen und somit, da die gesamte Bestrahlungsleistung als Fläche unter dem Bestrahlungsstärkeprofil E_L unverändert bleibt, einen höheres Maximum und einen steileren Abfall um dieses Maximum. Anordnungen und Verfahren nach dem Stand der Technik versuchen daher, zur Erreichung einer höheren Mindestbestrahlungsstärke E min für die Erzielung eines physikalischen Effekts und/oder zur Verbesserung der Genauigkeit bei der Erzielung eines physikalischen Effekts die numerische Apertur der plankonvexen asphärischen Linse L zu vergrößern.

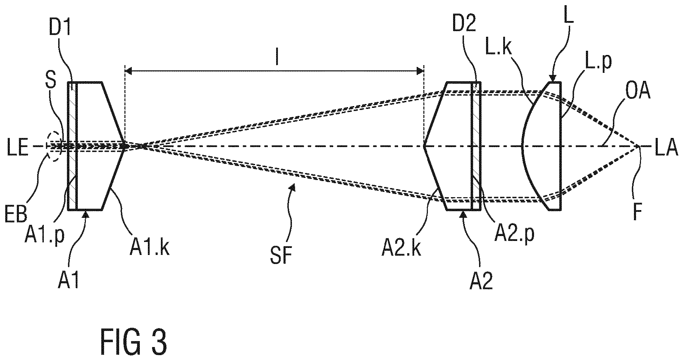

**Figur 3** zeigt schematisch den Strahlverlauf durch einen erfindungsgemäßen Strahlfokussierer SF, mit dem bei gleicher numerischer Apertur ein kleinerer Wirksamkeitskreis um den Brennpunk F und/oder eine im Brennpunkt F größere Bestrahlungsstärke erreicht werden kann als nach den Anordnungen und Verfahren nach dem Stand der Technik. Der Strahlfokussierer SF umfasst ein erstes Axikon A1, ein zweites Axikon A2 und eine plankonvexe asphärische Linse L, die entlang einer gemeinsamen optischen Achse OA angeordnet sind.

Das erste und zweite Axikon A1, A2 sind als konisch geschliffene Linsen aus Material mit einem höheren Brechungsindex als Luft mit jeweils einer Planfläche A1.p, A2.p und jeweils einer konischen Mantelfläche A1.k, A2.k ausgebildet, wobei die konischen Mantelflächen A1.k, A2.k des ersten und zweiten Axikons A1, A2 den gleichen Öffnungswinkel aufweisen. Somit weisen das erste Axikon A1 und das zweite Axikon A2 auch denselben Axikonwinkel auf. Das erste Axikon A1 weist mit seiner Planfläche A1.p zum Lichteintritt LE des Strahlfokussierers SF und bildet dessen Eintrittsluke. Das zweite Axikon A2 weist mit seiner Planfläche A2.p zum Lichtaustritt LA des Strahlfokussierers SF. Somit liegen sich die konischen Mantelflächen beider Axikons A1.k, A2.k rotationssymmetrisch zur optischen Achse OA gegenüber.

Auf den Planflächen des ersten und zweiten Axikons A1.p, A2.p können jeweils ein erstes und zweites diffraktiv-optisches Element D1, D2 angeordnet sein, welche die gleiche Transmissionsfunktion aufweisen. Diese Transmissionfunktion ist so gewählt, dass die Gruppengeschwindigkeitsdispersion eines ultrakurzen Laserpulses beim Durchlauf durch den Strahlfokussierer SF minimiert wird. Optional kann die Transmissionsfunktion zudem so gewählt sein, dass Dispersionen höherer Ordnung für einen solchen ultrakurzen Laserpuls minimiert werden.

Austrittsseitig nach dem zweiten Axikon A2 ist die asphärische plankonvexe Linse L aus einem Material mit einem höheren Brechungsindex als Luft mit der planen Fläche L.p zum Austritt des Strahlfokussierers SF weisend angeordnet. Somit liegt die konvexe Fläche L.k der plankonvexen asphärischen Linse L rotationssymmetrisch zur optischen Achse OA der Planfläche A2.p des zweiten Axikons A2 gegenüber. Die plane Fläche L.p der plankonvexen asphärischen Linse L bildet die Austrittsluke des Strahlfokussierers SF.

Ein Eintrittsbündel EB von kollimierten Strahlen S um die und parallel zu der optischen Achse OA, das einen kreisförmigen Querschnitt aufweist, wird durch das erste Axikon A1 in ein Strahlenbündel mit ringförmigem Querschnitt gebrochen, wobei sich der innere und äußere Durchmesser des ringförmigen Querschnitts in Austrittsrichtung mit zunehmendem Abstand vom ersten Axikon A1 zunächst gleichförmig verringern und dann gleichförmig vergrößern.

Das zweite Axikon A2 ist in einem solchen Abstand 1 vom ersten Axikon A1 angeordnet, dass auf die konische Fläche A2.k ein Strahlenbündel mit einem ringförmigen Querschnitt auftrifft, dessen innerer Durchmesser wesentlich größer ist als der Durchmesser des kreisförmigen Querschnitts des Eintrittsbündels EB. Nach den Gesetzen der geometrischen Optik bewirkt das zweite Axikon A2, da es denselben Axikonwinkel aufweist wie das erste Axikon A1, den Austritt eines zur optischen Achse OA kollimierten Strahlenbündels mit einem ringförmigen Querschnitt, der etwa gleich zum ringförmigen Querschnitt des auf die konische Fläche A2.k des zweiten Axikons A2 auftreffenden Strahlenbündels ist.

Dieses ringförmige, gegenüber dem Eintrittsbündel EB aufgeweitete Strahlenbündel trifft nun auf die konvexe Fläche L.k der austrittsseitig angeordneten plankonvexen asphärischen Linse L und wird von dieser konvergierend gebrochen. Die konvexe Fläche L.k ist so geformt, dass sich nach den Gesetzen der geometrischen Optik alle Strahlen in einem austrittsseitigen Brennpunkt F treffen würden.

In einem Ausführungsbeispiel der Erfindung ist es möglich, anstelle einer plankonvexen asphärischen Linse L eine asphärische Linse zu verwenden, welche anstelle der planen Fläche L.p eine rotationssymmetrisch zur optischen Achse OA gekrümmte eintrittsseitige Fläche aufweist, die sphärisch oder ebenfalls asphärisch ausgebildet sein kann. Mittels einer solchen asphärischen Linse ist es möglich, ein Eintrittsbündel EB von Strahlen auch dann in einem Brennpunkt F zu fokussieren, wenn diese Strahlen nicht perfekt kollimiert sind, sondern eine leichte Divergenz oder Konvergenz aufweisen. In vorteilhafter Weise kann mittels einer solchen asphärischen Linse auch eine größere Robustheit gegenüber einer Verkippung der einzelnen optischen Bauelemente des erfindungsgemäßen Strahlfokussierers SF gegeneinander oder gegen die optische Achse OA erzielt werden.

Tatsächlich ergibt sich auch hier, aufgrund der Beugung des Lichtes, eine Verteilung der Bestrahlungsstärke in der Brennebene, welche nicht in einem infinitesimal kleinen Brennpunkt F konzentriert ist, sondern rotationssymmetrisch über diesen hinausreicht. Figur 2 stellt schematisch das mit dem erfindungsgemäßen Strahlfokussierer SF erzielte Bestrahlungsstärkeprofil E_SF neben dem Bestrahlungsstärkeprofil E_L für eine reine plankonvexe asphärische Linse L nach dem Stand der Technik ohne Verwendung von Axikons A1, A2 zur Strahlaufweitung dar, wobei beide Anordnungen die gleiche numerische Apertur aufweisen.

Wie aus Figur 2 erkennbar, ist das zentrale Maximum, also der Bereich zwischen den beiden das Maximum einschließenden Minima oder Nullstellen, des mit dem Strahlfokussierer SF erzielten Bestrahlungsstärkeprofils E_SF schmaler als das zentrale Maximum des Bestrahlungsstärkeprofils E_L nach dem Stand der Technik. Insbesondere ist auch der Bereich, in dem die vorbestimmte Mindestbestrahlungsstärke E_min überschritten wird, mit einem durch den Strahlfokussierer SF geformten Strahl schmaler und entspricht einem Kreis um die optische Achse OA, dessen Radius durch den Abstandswert x_SF_min gegeben ist, an welchem die Mindestbestrahlungsstärke E_min vom Bestrahlungsstärkeprofil E_SF gerade erreicht wird.

In vorteilhafter Weise kann mit dem Strahlfokussierer SF daher eine genauere Bearbeitung eines Werkstücks oder eines Materials erfolgen, wenn diese Bearbeitung auf einem physikalischen Effekt beruht, der nur oberhalb einer solchen vorbestimmten Mindestbestrahlungsstärke E_min ausgelöst wird, ohne dass hierzu die numerische Apertur mit den aus dem Stand der Technik bekannten nachteiligen Auswirkungen vergrößert werden muss.

Für den Fachmann ist offensichtlich, dass sich für ein Eintrittsbündel EB, das nicht ausschließlich exakt kollimierte Strahlen S umfasst, sondern leicht divergierende oder konvergierende, im Allgemeinen also leicht, beispielsweise weniger als 5 Grad, gegenüber der optischen Achse OA geneigte Strahlen S, ein Bestrahlungsstärkeprofil ergibt, das dem dargestellten Verlauf des Bestrahlungsstärkeprofils E_SF prinzipiell, insbesondere hinsichtlich der Höhe und Breite des zentralen Maximums, ähnlich ist. Somit ist der Strahlfokussierer SF in vorteilhafter Weise auch für nicht exakt kollimierte Lichtquellen einsetzbar.

**BEZUGSZEICHENLISTE**

| | |
|---|---|
| SF | Strahlfokussierer |
| S | Lichtstrahl, Strahl |
| L | plankonvexe asphärische Linse |
| L.p | plane Fläche der plankonvexen asphärischen Linse |
| L.k | konvexe Fläche der plankonvexen asphärischen Linse |
| OA | optische Achse |
| EB | Eintrittsbündel |
| AB | Austrittsbündel |
| LE | Lichteintritt, Eintrittsseite |
| LA | Lichtaustritt, Austrittsseite |
| F | Brennpunkt, Fokus |
| X | Positionsachse |
| E | Bestrahlungsstärkeachse |
| E_L | Bestrahlungsstärkeprofil einer plankonvexen asphärischen Linse |
| E_SF | Bestrahlungsstärkeprofil eines Strahlfokussierers |
| E_min | Mindestbestrahlungsstärke |
| A1, A2 | erstes, zweites Axikon |
| 1 | Abstand |
| A1.p, A2.p | Planfläche des ersten, zweiten Axikons |
| A1.k, A2.k | konische Mantelfläche des ersten, zweiten Axikons |
| D1, D2 | erstes, zweites diffraktiv-optisches Element |

**Patentansprüche**

1. Strahlfokussierer (SF) zur Fokussierung eines Eintrittsbündels (EB) kollimierter Strahlen (S) um eine optische Achse (OA) in einem Fokusbereich um einen Brennpunkt (F), umfassend ein eintrittsseitig angeordnetes erstes Axikon (A1) mit einem Axikonwinkel, ein zweites Axikon (A2) mit gleichem Axikonwinkel und eine austrittsseitig angeordnete asphärische Linse (L), die zentriert entlang der optischen Achse (OA) aufeinanderfolgend angeordnet sind, wobei das erste und das zweite Axikon (A1, A2) spiegelsymmetrisch entlang der optischen Achse (OA) angeordnet sind und ein Brennpunkt (F) der asphärischen Linse (L) zur Austrittsseite (LA) des Strahlfokussierers (SF) weist, wobei der Abstand (1) zwischen dem ersten und dem zweiten Axikon (A1, A2) verstellbar ist, **dadurch gekennzeichnet, dass** der Krümmungsradius an jedem Punkt der austrittsseitigen Fläche (L.k) und/oder an jedem Punkt der eintrittsseitigen Fläche (L.p) der asphärischen Linse (L) abhängig vom senkrechten Abstand dieses Punktes zur optischen Achse (OA) so gewählt ist, dass bei Verstellung des Abstands (1) zwischen dem ersten und dem zweiten Axikon (A1, A2) der Fokusbereich um den Brennpunkt (F) entlang der optischen Achse (OA) verschoben wird.

2. Strahlfokussierer (SF) nach Anspruch 1, **dadurch gekennzeichnet, dass** die asphärische Linse (L) rotationssymmetrisch und entlang eines Meridianschnitts durch die eintrittsseitige Linsenfläche und/oder entlang eines Meridianschnitts durch die austrittsseitige Linsenfläche stetig gekrümmt ist.

3. Strahlfokussierer (SF) nach Anspruch 1, **dadurch gekennzeichnet, dass** die asphärische Linse (L) eintrittsseitig eine plane Fläche (L.p) aufweist.

4. Strahlfokussierer (SF) nach Anspruch 1, **dadurch gekennzeichnet, dass** die asphärische Linse (L) eintrittsseitig eine konkave Fläche aufweist.

5. Strahlfokussierer (SF) nach einem der vorhergehenden Ansprüche, **dadurch gekennzeichnet, dass** die Planfläche (A1.p) des ersten Axikons (A1) zur Eintrittsseite (LE) und die Planfläche (A2.p) des zweiten Axikons (A2) zur Austrittsseite (LA) weist.

6. Justierverfahren zur Justierung eines Strahlfokussierers (SF) nach Anspruch 5 für die Fokussierung von monochromatischem Licht, **dadurch gekennzeichnet, dass** mittels Einstellung eines wellenlängenabhängig vorbestimmten Abstands (1) zwischen dem ersten und dem zweiten Axikon (A1, A2) ein Fokusbereich um den Brennpunkt (F) mit für das monochromatische Licht minimalem Querschnitt eingestellt wird.

7. Justierverfahren nach Anspruch 6 zur Justierung eines Strahlfokussierers (SF), **dadurch gekennzeichnet, dass** mittels Einstellung eines vorbestimmten Abstands (1) zwischen dem ersten und dem zweiten Axikon (A1, A2) ein dazu korrespondierend vorbestimmter Abstand des Fokusbereichs von der Abbildungsoptik eingestellt wird.

8. Verfahren zur Fokussierung eines kollimierten Strahlenbündels mit einem Strahlfokussierer (SF) nach einem der Ansprüche 1 bis 7, **dadurch gekennzeichnet, dass** der Fokusbereich um den Brennpunkt (F) derart verengt wird, dass innerhalb des Fokusbereichs eine Bestrahlungsstärke oberhalb einer Mindestbestrahlungsstärke (E_min) für einen eine Polymerisation oder für einen optischen Durchbruch oder für eine Schmelze eines festen Werkstoffs erzielt wird, wobei außerhalb des Fokusbereichs die Polymerisation beziehungsweise der optische Durchbruch oder die Schmelze des festen Werkstoffs vollständig ausbleibt.

9. Strahlfokussierer (SF) nach einem der Ansprüche 1 bis 5, zusätzlich umfassend einen Laser, zur Durchführung eines Verfahrens nach Anspruch 8, **dadurch gekennzeichnet, dass** der Laser eintrittsseitig des Strahlfokussierers (SF) angeordnet ist.

10. Strahlfokussierer (SF) nach Anspruch 9, **dadurch gekennzeichnet, dass** zwischen dem Strahlfokussierer (SF) und dem Fokusbereich um den Brennpunkt (F) ein optisch durchlässiges Schutzelement angeordnet ist.

## Claims

1. Beam-focusing device (SF) for focusing an entrance bundle (EB) of collimated rays (S) around an optical axis (OA) to a focus area around a focal point (F), comprising a first axicon (A1), which is arranged on the entrance side and has an axicon angle, a second axicon (A2) having the same axicon angle, and an aspheric lens (L), which is arranged on the exit side, which are arranged in succession centred along the optical axis (OA), wherein the first and the second axicon (A1, A2) are arranged mirror-symmetrically along the optical axis (OA) and a focal point (F) of the aspheric lens (L) is oriented towards the exit side (LA) of the beam-focusing device (SF), wherein the distance (1) between the first and the second axicon (A1, A2) is adjustable, **characterized in that** the radius of curvature at each point of the exit-side surface (L.k) and/or at each point of the entrance-side surface (L.p) of the aspheric lens (L) is selected, in dependence on the perpendicular distance of said point from the optical axis (OA), such that, upon adjustment of the distance (1) between the first and the second axicon (A1, A2), the focus area around the focal point (F) is displaced along the optical axis (OA).

2. Beam-focusing device (SF) according to Claim 1, **characterized in that** the aspheric lens (L) is rotation-symmetrical and is constantly curved along a meridian section through the entrance-side lens surface and/or along a meridian section through the exit-side lens surface.

3. Beam-focusing device (SF) according to Claim 1, **characterized in that** the aspheric lens (L) has, on the entrance side, a planar surface (L.p).

4. Beam-focusing device (SF) according to Claim 1, **characterized in that** the aspheric lens (L) has, on the entrance side, a concave surface.

5. Beam-focusing device (SF) according to one of the preceding claims, **characterized in that** the planar surface (A1.p) of the first axicon (A1) is oriented towards the entrance side (LE) and the planar surface (A2.p) of the second axicon (A2) is oriented towards the exit side (LA).

6. Adjustment method for adjusting a beam-focusing device (SF) according to Claim 5 for focusing monochromatic light, **characterized in that** a focus area around the focal point (F) with a cross-section that is minimal for the monochromatic light is set by way of setting a distance (1), which is predetermined in wavelength-dependent fashion, between the first and the second axicon (A1, A2).

7. Adjustment method according to Claim 6 for adjusting a beam-focusing device (SF), **characterized in that**, by setting a predetermined distance (1) between the first and the second axicon (A1, A2), a corresponding predetermined distance of the focus area is set by the imaging optical unit.

8. Method for focusing a collimated bundle of rays using a beam-focusing device (SF) according to one of Claims 1 to 7, **characterized in that** the focus area around the focal point (F) is narrowed such that an irradiance above a minimum irradiance (E_min) for a polymerization or an optical penetration or for a melt of a solid substance is achieved within the focus area, wherein the polymerization or the optical penetration or the melt of the solid material does not occur outside the focus area at all.

9. Beam-focusing device (SF) according to one of Claims 1 to 5, additionally comprising a laser, for performing a method according to Claim 8, **characterized in that** the laser is arranged on the entrance side of the beam-focusing device (SF).

10. Beam-focusing device (SF) according to Claim 9, **characterized in that** an optically transmissive protection element is arranged between the beam-focusing device (SF) and the focus area around the focal point (F).

**Revendications**

1. Focalisateur de rayon (SF) destiné à focaliser un faisceau d'entrée (EB) de rayons (S) collimatés autour d'un axe optique (OA) dans une zone de focalisation autour d'un foyer (F), comprenant un premier axicon (A1) disposé du côté de l'entrée et ayant un angle d'axicon, un deuxième axicon (A2) ayant le même angle d'axicon et une lentille asphérique (L) disposée du côté de la sortie, lesquels sont disposés séquentiellement centrés le long de l'axe optique (OA), le premier et le deuxième axicon (A1, A2) étant disposés selon une symétrie en miroir le long de l'axe optique (OA) et un foyer (F) de la lentille asphérique (L) étant orienté vers le côté sortie (LA) du focalisateur de rayon (SF), l'écart (1) entre le premier et le deuxième axicon (A1, A2) étant réglable, **caractérisé en ce que** l'angle de courbure à chaque point de la surface côté sortie (L.k) et/ou à chaque point de la surface côté entrée (L.p) de la lentille asphérique (L) est choisi en fonction de l'écart perpendiculaire de ce point de l'axe optique (OA) de telle sorte que lors d'un déplacement de l'écart (1) entre le premier et le deuxième axicon (A1, A2), la zone de focalisation est décalée autour du foyer (F) le long de l'axe optique (OA).

2. Focalisateur de rayon (SF) selon la revendication 1, **caractérisé en ce que** la lentille asphérique (L) présente une courbure constante à symétrie de rotation et le long d'une portion méridienne à travers la surface de lentille coté entrée et/ou le long d'une portion méridienne à travers la surface de lentille coté sortie.

3. Focalisateur de rayon (SF) selon la revendication 1, **caractérisé en ce que** la lentille asphérique (L) possède une surface plane (L.p) du côté de l'entrée.

4. Focalisateur de rayon (SF) selon la revendication 1, **caractérisé en ce que** la lentille asphérique (L) possède une surface concave du côté de l'entrée.

5. Focalisateur de rayon (SF) selon l'une des revendications précédentes, **caractérisé en ce que** la surface plane (A1.p) du premier axicon (A1) est orientée vers le côté entrée (LE) et la surface plane (A2.p) du deuxième axicon (A2) vers le côté sortie (LA) .

6. Procédé d'ajustement destiné à ajuster un focalisateur de rayon (SF) selon la revendication 5 pour la focalisation de lumière monochromatique, **caractérisé en ce qu'**une zone de focalisation ayant une section transversale minimale pour la lumière monochromatique est réglée autour du foyer (F) par réglage d'un écart (1) prédéfini dépendant de la longueur d'onde entre le premier et le deuxième axicon (A1, A2).

7. Procédé d'ajustement selon la revendication 6 destiné à ajuster un focalisateur de rayon (SF), **caractérisé en ce que** le réglage d'un écart (1) prédéfini entre le premier et le deuxième axicon (A1, A2) permet de régler un écart prédéfini correspondant à celui-ci entre la zone de focalisation et l'optique de représentation.

8. Procédé de focalisation d'un faisceau de rayons collimaté avec un focalisateur de rayon (SF) selon l'une des revendications 1 à 7, **caractérisé en ce que** la zone de focalisation est rétrécie autour du foyer (F) de telle sorte qu'une intensité d'irradiation supérieure à une intensité d'irradiation minimale (E_min) pour une polymérisation ou pour une percée optique ou pour une fusion d'un matériau solide est obtenue à l'intérieur de la zone de polarisation, la polymérisation ou la percée optique ou la fusion du matériau solide étant totalement absente à l'extérieur de la zone de focalisation.

9. Focalisateur de rayon (SF) selon l'une des revendications 1 à 5, comprenant en plus un laser, destiné à mettre en oeuvre un procédé selon la revendication 8, **caractérisé en ce que** le laser est disposé du côté de l'entrée du focalisateur de rayon (SF) .

10. Focalisateur de rayon (SF) selon la revendication 9, **caractérisé en ce qu'**un élément de protection optiquement transparent est disposé autour du foyer (F) entre le focalisateur de rayon (SF) et la zone de focalisation.

## FIG 1

## FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0627643 A1
- EP 2258510 A1
- DE 102007024700 A1
- JP 2003275888 A
- US 20010017838 A1
- US 20090242523 A1